# FASCICULE DE BREVET EUROPEEN

(11) **EP 2 627 166 B1**
(45) Date de publication et mention de la délivrance du brevet: **07.01.2015**
(21) Numéro de dépôt: 11779811.6
(22) Date de dépôt: 06.10.2011
(51) Int. Cl.: A01G 9/14, A01G 9/24

(54) **SERRE DE TYPE CHAPELLE À PERFORMANCES OPTIMALES**
TREIBHAUS MIT OPTIMALER LEISTUNG
GREENHOUSE WITH OPTIMAL PERFORMANCE

(30) Priorité: 14.10.2010 FR 1058372
(43) Date de publication de la demande: 21.08.2013
(73) Titulaire: Filclair, 13770 Venelles (FR)
(72) Inventeur: THERY, Arnauld, F-13510 Eguilles (FR)
(74) Mandataire: Domange, Maxime
(86) Numéro de dépôt international: PCT/FR2011/052338
(87) Numéro de publication internationale: WO 2012/049406

(56) Documents cités:
- EP-A2- 2 189 056
- GB-A- 390 156
- US-A1- 2009 183 425

## Description

### Arrière-plan de l'invention

La présente invention se rapporte au domaine général des serres de type « chapelle », destinées à être installées en bloc multi-chapelles de plusieurs milliers de mètres carrés voire de plusieurs hectares d'un seul tenant.

Chaque serre « chapelle » est constituée d'une pluralité d'unités structurelles, implantées parallèlement les unes aux autres sur toute la longueur de la nef.

Chaque unité structurelle comprend au moins deux poteaux verticaux latéraux, séparés d'une largeur de nef prédéterminée, et supportant des arceaux cintrés formant toiture.

De manière traditionnelle, les unités structurelles sont reliées les unes aux autres au niveau des extrémités supérieures des poteaux par des chéneaux longitudinaux.

L'invention concerne les serres dont la couverture est constituée d'une paroi transparente formée d'un film de matière plastique tendu du type simple paroi ou du type double paroi gonflable. Depuis que l'utilisation des films plastiques en tant que revêtement de couverture des serres est répandue, les largeurs de nef des serres fabriquées dans le monde n'ont eu de cesse d'augmenter.

En effet, parallèlement au développement de l'utilisation des serres à couvertures plastiques, simple puis double paroi gonflable, dans le monde, les largeurs de nefs ont augmenté, et les installations de type multi-nefs ont pris le pas sur les installations mono-nefs. Les mono-nefs sont des installations composées d'une seule chapelle quand les installations multi-nefs sont composées de plus d'une chapelle.

En élargissant la largeur de nef des serres, et en développant le concept multi-nef, on obtient une réduction des matières premières utilisées et donc une réduction des investissements. De telles installations permettent d'obtenir un retour sur investissement optimisé.

L'invention se situe dans le cadre d'une telle évolution. L'invention concerne plus particulièrement les serres de type « multi-chapelle » dont la largeur de nef dépasse strictement 9 mètres, installées en multi-nefs.

Il est reconnu par la profession que le profil optimal de la voute d'une serre doit suivre au maximum les angles d'incidence du soleil pour en recevoir le maximum de lumière. Le film plastique doit alors être le plus possible situé à 90° de l'incidence. En effet, un angle différent de 90° augmente l'épaisseur de couche plastique traversée par le rayon lumineux et diminue sa puissance. Cette règle aboutit à l'utilisation quasi généralisé d'un profil de serre présentant un rapport faîte sur largeur de la nef toujours supérieur à 1 sur 5 et, surtout, une forme en ogive. Un tel profil est très efficace pour conserver une incidence avec les rayons du soleil optimal et ainsi limiter les problèmes de réfraction en incidence faible.

Cependant, l'installation en multi-nefs implique la présence d'ombres portées de chaque voûte de serre sur la voûte de la serre suivante. Cela ne se produit pas dans les serres chapelles mono-nefs. On observe ainsi la présence de larges zones d'ombre portées en début de journée et en fin de journée engendrant une arrivée retardée de la lumière et une chute prématurée de la lumière utile à la photosynthèse sur la majeure partie des serres multi-chapelles.

En outre, plus la largeur de nefs augmente, plus une bande donnée de la serre reste dans l'ombre longtemps.

Or, il est de plus en plus crucial d'améliorer la productivité au sein des serres, cette productivité dépendant principalement de la quantité de lumière entrante responsable de la photosynthèse et ce, en tout point de la serre.

La présence des ombres portées est devenue de plus en plus handicapante pour la productivité au fur et à mesure de l'élargissement des chapelles à cause de la taille des ombres portées et de la taille des masses d'air froid ainsi générées.

Comme les résultats obtenus restent satisfaisants, la forme générale haute en ogive est peu contestée par la profession. L'arrivée récente sur le marché de serres présentant une largeur de nef supérieure à 12 mètres relance cependant des interrogations sur la présence des ombres portées.

Un autre point très important du fonctionnement des serres de largeur de nef supérieure à 9 mètres est l'efficacité de leur ventilation. Il est actuellement reconnu que la présence d'un ouvrant double sur le faîtage de la serre est une solution optimale, particulièrement dans les régions peu ventées.

La présence d'un tel double ouvrant central au faîtage des serres de largeur de nef importante est particulièrement avantageux car il peut permettre de stimuler les effets de convection d'air, en particulier en début de journée lorsque les problèmes de non uniformité des températures dues à la présence d'ombre portée sont particulièrement importants. L'emplacement d'un tel double ouvrant au sommet des chapelles est crucial pour générer des mouvements d'air dans la totalité de l'espace de la serre surtout en absence de vent.

Les mouvements de convection d'air sont ainsi déclenchés par effet cheminée. Cet effet cheminé est d'autant plus effectif que la hauteur du sommet de la serre est élevé. L'invention concerne ainsi les serres pour lesquelles les poteaux verticaux présentent une hauteur supérieure à 3,5 mètres.

Dans les régions ventées, d'autres emplacements d'ouvrant permettent de brasser suffisamment l'air pour faire circuler l'air logé aux sommets des nefs. Il existe à ce sujet une serre avec un ouvrant sur chéneaux et présentant un rapport faîte sur largeur de nef très réduit en dessous de 0,15.

Ce profil est critiqué car il a été alors observé que, dès lors que le rapport de la distance entre le sommet de la serre et la droite passant par l'extrémité supérieure des poteaux latéraux sur la largeur de nef est inférieur à 1 sur 5, la présence de condensation devient globalement préjudiciable sur le tiers central de la voute.

Avec un tel rapport de dimension, la condensation ne peut pas s'évacuer par gravité le long des parois de la voute. En absence de vent, l'air présent au sommet de la serre ne peut pas s'évacuer, la condensation est donc persistante et engendre une problématique de gouttage. Ces phénomènes sont particulièrement observés en début de journée quand le début de cycle de la photosynthèse engendre une évapotranspiration du matériel végétal cinq fois supérieur que pendant la nuit et une élévation subite de l'hygrométrie. Ces phénomènes sont un problème reconnu des voutes à rapport dimensionnel caractéristique réduit.

En effet, pour un rapport dimensionnel caractéristique inférieur à 0,20, l'angle sous lequel le faîte est vu à partir de l'extrémité supérieure du poteau est inférieur à 21,8°. Il est par ailleurs nécessaire que les arceaux formant toiture des serres revêtues d'une paroi plastique présentent une courbure minimale éloignant leur trajet de la droite reliant le faîte de la serre à l'extrémité supérieure du poteau. Cette courbure minimale des arceaux formant toiture, même avec l'utilisation d'un arc en cintre brisé ou en ogive, permet d'accéder à un angle maximal au sommet de la serre inférieur à 15° pour des largeurs de nef dépassant 9 mètres. Cet angle n'autorise pas un écoulement des gouttes le long des parois. Les phénomènes de condensation s'avèrent donc être absolument problématiques au sein des serres présentant une grande largeur de nef, un ouvrant latéral et un rapport dimensionnel caractéristique inférieur à 1 sur 5.

Il est alors nécessaire d'attendre soit une action du vent asséchant l'atmosphère, soit un réchauffement suffisant de l'intérieur de la serre pour voir disparaître le problème de condensation.

L'installation d'un ouvrant sur faîtage qui permettrait une aération centrale est proscrite car le phénomène de condensation sur la portion centrale à faible pente ne serait pas empêché pour autant, en particulier en début de cycle de la photosynthèse et les mouvements d'ouverture engendreraient des gouttages encore plus importants.

L'ouverture de l'ouvrant central en début de journée s'avérerait d'ailleurs dramatique car les mouvements d'ouverture de l'ouvrant sur lequel la condensation au sommet de la serre se sera accumulée, engendreraient systématiquement un gouttage. Ce gouttage peut avoir lieu à partir d'un point bas de la poche formée par la paroi inférieure de la double paroi gonflable ou avoir lieu à partir de n'importe quel point de cette paroi intérieure.

L'invention se propose de résoudre ce problème particulier de condensation pour des serres à profil aplati. L'invention se propose également de lever un préjugé sur l'inefficacité des serres à profil aplati d'un point de vue de la performance.

### Objet et résumé de l'invention

La présente invention propose pour cela une serre de type « chapelle » destinée à être installée en blocs « multi-chapelle » de plusieurs milliers de mètres carrés d'un seul tenant, cette serre de type « chapelle » étant constituée d'une pluralité d'unités structurelles implantées parallèlement les unes aux autres sur toute la longueur de la nef,
chaque unité structurelle comprenant au moins deux poteaux verticaux latéraux d'une hauteur supérieure ou égale à 3,5 mètres, séparés d'une largeur de nef strictement supérieure à 9 mètres et supportant des arceaux formant toiture au niveau de leurs extrémités supérieures, ces arceaux se rejoignant au centre de la serre, les unités structurelles étant reliées les unes aux autres au niveau des extrémités supérieures des poteaux par des chéneaux longitudinaux,
les surfaces de la serre étant conçues pour recevoir une couverture transparente formé d'un ou plusieurs films plastiques,
caractérisé en ce que, cette serre étant telle que le rapport de la distance entre le sommet de la serre et la droite horizontale passant par les extrémités supérieures des poteaux latéraux sur la largeur de nef est inférieur à 1/5,
cette serre présente un ouvrant double central articulé sur au moins un axe d'articulation au sommet de la serre, cet ouvrant double étant tel que les ouvrants latéraux présentent une largeur entre l'axe d'articulation et le bout de l'ouvrant supérieure ou égale à 1,4 mètre, le bout de l'ouvrant venant reposer sur des linteaux latéraux lors de la fermeture,
le profil transversal de la serre à ouvrants fermés étant tel que, de chaque côté de la serre, l'angle formé entre la droite tangente à l'arceau dans le plan transversal de la serre au niveau du linteau latéral et la droite passant par l'axe d'articulation et le bout de l'ouvrant latéral fermé dans le plan transversal de la serre est non nul et crée une rupture de pente accentuant la pente de chaque côté du sommet, cette rupture de pente assurant une pente de l'ouvrant fermé supérieure ou égale à 15°.

Dans la suite, le rapport de la distance entre le sommet de la serre et la droite horizontale passant par les extrémités supérieures des poteaux latéraux sur la largeur de nef est désigné par les termes « rapport dimensionnel caractéristique de la serre » qui est ici selon l'invention inférieur à 1/5.

Les caractéristiques de la serre selon l'invention permettent de résoudre le problème de la condensation dans le tiers central de la chapelle aplatie en y installant un ouvrant central double et en ménageant une rupture de pente au bout des ouvrants latéraux entre la paroi de la serre et la paroi de l'ouvrant.

Le fait que le tiers central de la chapelle aplatie soit désormais, selon l'invention, un ouvrant double permet d'assurer des effets de ventilation optimaux car centraux. La hauteur des poteaux latéraux supérieure à 3,5 mètres et la présence du double ouvrant assurent un effet cheminée très efficace. Dans le cas où l'on voudra augmenter encore l'effet cheminée tout en gardant un rapport dimensionnel caractéristique faible, on augmentera la hauteur des poteaux latéraux. Typiquement des poteaux de hauteur supérieure à 5 mètres pourront être utilisés. La combinaison de cette hauteur de poteau avec l'aplatissement de la voute de la serre permet de diminuer la quantité de matériau utilisée pour un effet cheminée identique qu'avec une hauteur de poteau plus faible et une voute plus haute. On remarque en effet que le rapport hauteur de la voute sur hauteur des poteaux est très différent des rapports connus aujourd'hui et très inférieur à ceux-ci grâce à la hauteur très réduite de la voute. En montant la voute sur des poteaux latéraux hauts, on ne nuit pas à l'effet cheminée puisque une grande hauteur sous le double ouvrant central est préservée.

L'aménagement, selon l'invention, d'une rupture de pente entre la tangente aux arceaux et la pente de l'ouvrant permet de conserver un rapport de la distance entre le sommet de la serre et la droite passant par les extrémités supérieures de poteaux latéraux sur la largeur de nef inférieur à 1/5, tout en assurant une pente des ouvrants supérieure à 15° compatible avec l'évacuation de la condensation de la nuit au sein de la serre.

Un tel profil de serre aplati et à rupture de pente constitue l'originalité majeure de l'invention dans le contexte particulier des serres actuelles de grandes dimensions. Ce profil particulier permet la résolution du problème de condensation observé de manière systématique dans le tiers central dès lors qu'un profil aplati est utilisé dans les serres actuelle de grandes dimensions.

La combinaison de la rupture de pente avec le caractère aplati de la serre permet d'accéder à un effet combiné de ces deux caractéristiques pour supprimer le problème de condensation à l'intérieur de la serre sur le tiers central des voutes.

Cet effet d'évacuation de la condensation matinale est obtenu, d'une part, grâce à la pente localement augmentée au centre de la chapelle et qui permet un écoulement des gouttelettes de condensation et grâce à la diminution des ombres portées qui entraine un réchauffement rapide de l'atmosphère de la serre en début de journée engendrant une très bonne évaporation des gouttelettes de condensation.

Globalement, on remarque qu'il est préférable de répartir l'amenée de lumière tout au long de la journée. En l'occurrence, il est actuellement recherché l'utilisation de la lumière des heures matinales et vespérales où le soleil présente une incidence basse pour augmenter les productivités. Dans de nombreux cas, les exploitants éclairent la serre pendant ces heures. La réduction des ombres portées offerte par le profil globalement aplati permet d'utiliser au mieux la lumière matinale et vespérale. L'utilité d'un modèle de serre qui, par sa simple forme géométrique aplati donne, à son utilisateur, un rendement de 10 % de lumière gratuite en plus tous les jours est évidente.

Un effet synergique supplémentaire provient du fait que, aux heures matinales et vespérales, l'incidence solaire est plus importante sur les ouvrants que sur le plan tangent aux arceaux formant toiture au niveau du bout de l'ouvrant et ce, grâce à la rupture de pente selon l'invention.

En effet, la faiblesse de l'incidence solaire sur le tiers central du sommet d'une serre de rapport dimensionnel caractéristique inférieur à 0,20 sans rupture de pente est préjudiciable. En effet, la platitude du sommet de la serre présentant un rapport dimensionnel caractéristique inférieur à 0,20 génère un phénomène d'ombrage par réfraction des rayons dans la serre avant que l'incidence ne devienne suffisante pour faire entrer correctement la lumière dans le tiers central.

En début et en fin de journée, en absence d'une rupture de pente, le tiers central presque plat génère une tâche sombre au sein de la serre à cause principalement de l'incidence du soleil qui ne peut pas pénétrer dans la serre à ce niveau à cause des phénomènes de réfraction. On remarque que cette incidence peu favorable du soleil en début de matinée retarde la suppression des gouttelettes formées par condensation.

La condensation formée sur le tiers central ne peut donc pas être délogée par irradiation solaire directe avant des heures avancées de la journée.

La surface supérieure des serres aplaties permet en revanche la pénétration de la lumière principalement aux heures les plus chaudes, ce qui est aussi généralement préjudiciable car engendrant l'échauffement le plus important au moment le moins souhaitable.

Ces phénomènes d'incidence solaire sur le tiers central d'une serre de faible rapport dimensionnel caractéristique peuvent même annuler les effets positifs de la diminution des ombres portées sur les serres successives permise par un tel faible rapport dimensionnel caractéristique. En outre l'incidence solaire sur le tiers central de la serre étant, avec l'invention, moins favorable à la pénétration des rayons autour de midi que dans le cas d'une serre aplatie simple sans rupture de pente, on évite une surchauffe pendant les heures les plus chaudes. Au besoin, l'utilisation d'un film diffusant sur les ouvrants peut permettre de diminuer encore cette surchauffe pendant les heures où le soleil est au zénith.

L'utilisation d'une rupture de pente avec le profil incurvé des arceaux formant toiture permet d'obtenir, en parallèle, dans le tiers central au centre de la serre, une incidence solaire en début de matinée plus favorable pour éliminer, par réchauffement solaire, les gouttelettes de condensation sur les parois intérieures dans le tiers central. L'incidence solaire sur les ouvrants rentre donc en synergie avec les effets décrits auparavant pour renforcer encore l'élimination de la condensation.

La présence d'une rupture de pente, combinée avec un rapport dimensionnel caractéristique inférieur à 1/5 permet donc la résolution d'un problème de condensation inconnu jusque-là car encore jamais rencontré. La réalisation de la rupture de pente avec des ouvrants rend en plus possible l'installation d'un double ouvrant sur faîtage dans le cas des serres aplaties, ce double ouvrant pouvant même être ouvert en cas de pluie.

En effet, la présence de la rupture de pente augmente la capacité d'ouverture et donc améliore les possibilités de gestion de l'hygrométrie et de la température dans la serre en cas de pluie. La double cassure de pente de part et d'autre du sommet de la serre permet de respecter un angle d'ouverture des ouvrants supérieur à 1% permettant l'évacuation des eaux pluviales, tout en préservant une capacité de ventilation suffisante. Ce point est particulièrement crucial en zones tropicales caractérisées par une saison des pluies significative, et une nécessité cruciale de conserver un potentiel de ventilation conséquent malgré les précipitations extérieures.

Un autre effet technique de la combinaison selon l'invention d'un profil aplati et d'une rupture de pente est une accélération de l'effet venturi par la diminution des turbulences de l'air circulant au sommet des serres dès lors qu'un des ouvrants est ouvert. L'invention sert également à favoriser la ventilation pour des vents faibles.

Un ouvrant double de faîtage travaille globalement en obéissant à deux grandes configurations.
1° Vent inférieur à 3,5 mètres seconde : la gestion des niveaux d'hygrométrie et de température est dépendante de la force de tirage constituée par la différence de température entre le sol de la serre et l'air extérieur ainsi que de la hauteur de la cheminée ainsi constituée. L'invention permet d'augmenter la hauteur de la cheminée sur une voute de forme plate grâce à la double cassure de pente.
2° Vent supérieur à 3,5 mètres seconde : La puissance de ventilation et donc la capacité de gestion des niveaux d'hygrométries et de températures dans la serre dépendent de la capacité, mesurée par logiciel de mécanique des fluides, de mettre l'air en mouvement par effet Venturi au niveau des bouts d'ouvrant. Un profil en aile d'avion à double pente permet d'augmenter de façon caractéristique la puissance du dispositif par diminution des turbulences créées.

En effet, d'ors et déjà, il est connu qu'un faible rapport dimensionnel caractéristique permet un écoulement davantage laminaire que pour les rapports dimensionnels caractéristiques supérieurs utilisés jusqu'à ce jour dans les serres à double ouvrant central. Lorsque les serres ont un profil aplati, l'air subit moins de contrecoups contre les voutes successives des serres et moins de turbulences se créent au niveau du bloc de serres.

La présence de la rupture de pente est particulièrement intéressante dès qu'un des ouvrants est ouvert de telle manière à faire un angle avec l'ouvrant fermé. Cela permet une accélération de l'air d'abord sur la rupture de pente de l'ouvrant fermé puis sur la paroi extérieure de l'ouvrant ouvert qui, faisant un angle encore plus important avec l'horizontale, permet à l'air d'accélérer encore davantage. L'air arrive donc au bout de l'ouvrant ouvert avec une vitesse accrue, tout cela avec un minimum de turbulences, c'est-à-dire sous forme d'un flux le plus laminaire possible.

Cela entraîne une dépression optimale au niveau du bout de l'ouvrant ouvert. Cette dépression est responsable d'un effet venturi renforcé qui aspire l'air se situant sous l'ouvrant ouvert. Cela engendre une circulation de l'air dans la serre tout à fait améliorée par rapport aux situations connues où les turbulences engendrent une diminution de l'effet du flux de vent qui présente son efficacité optimale dès lors que son écoulement est laminaire.

La possibilité de réaliser une telle ventilation optimisée permet, quand il est possible d'ouvrir l'ouvrant tôt dans la journée, de participer à l'évacuation de la condensation en début de journée.

Le profil de serre selon l'invention présente en outre un aspect esthétique lorsque les ouvrants sont ouverts. De loin, les ouvrants paraissent en effet « survoler » les voutes des serres très plates par ailleurs. Cela donne une impression de légèreté très agréable. Dans des zones d'implantation de serres particulièrement sensibles d'un point de vue esthétique, ce point peut s'avérer décisif.

Enfin, un des effets complémentaires de la rupture de pente est la possibilité d'ouvrir les ouvrants de manière à leur faire suivre l'incidence du soleil. Cela permet aux rayons du soleil de passer sous les ouvrants entre ceux-ci et les linteaux latéraux, cette bande ouverte étant d'une largeur relativement importante grâce à la rupture de pente.

On observe alors que l'ombre portée sur la voute suivante est encore diminuée par cette pratique. Enfin, la diminution des ombres portées obtenue avec un profil selon l'invention et un rapport dimensionnel caractéristique inférieur à 1 sur 5 évite de devoir éclairer la serre et augmente la plage horaire de la lumière utile à la photosynthèse le matin et le soir. La perte de puissance par augmentation de l'angle d'incidence du soleil sur le film a en fait moins d'impact sur l'ensoleillement global que la perte lumineuse engendrée par la création d'ombres portes dans le cas de serre multi-nefs.

Selon une caractéristique préférentielle de l'invention, le rapport de la distance entre le sommet de la serre et la droite horizontale passant par les extrémités supérieures des poteaux latéraux sur la largeur de nef est inférieur à 0,182.

Avec une telle valeur du rapport dimensionnel caractéristique de la serre, l'effet de l'invention est optimal d'après les observations des inventeurs, dans la mesure où, pour une telle valeur, l'angle maximal sous lequel est vu le sommet de la serre à partir de l'extrémité supérieure des poteaux latéraux est inférieur à 20°.

Dans ce cas, on optimise la diminution des ombres portées tout en assurant l'absence de problème de condensation sur les ouvrants grâce à la rupture de pente.

L'obtention d'un tel rapport dimensionnel caractéristique est susceptible d'engendrer une révolution dans le domaine de la serre plastique par l'aplatissement de plus en plus prononcé de la serre tout en ne rencontrant pas de problèmes de condensation y compris au sommet des chapelles. L'aplatissement permettant de gagner des heures d'ensoleillement, des gains de productivité conséquents sont à attendre des serres selon l'invention.

Dans un mode de réalisation avantageux, la rupture de pente est réalisée par l'intermédiaire d'un support d'élévation fixé sur le haut des arceaux formant toiture et au sommet duquel est placé le ou les axe(s) d'articulation des ouvrants latéraux.

Une telle réalisation permet d'éviter d'avoir à cintrer les tubes formant les arceaux formant toiture pour réaliser la rupture de pente.

La rupture de pente est seulement réalisée en faisant porter l'axe ou les axes d'articulation des ouvrants latéraux par un support d'élévation fixé au niveau du point de jonction entre les arceaux formant toiture au centre de la serre. Dans ce cas, les arceaux formant toiture forment une voute première au-dessus de laquelle le double ouvrant vient former une coiffe triangulaire dont les pentes sont supérieures ou égales à 15°.

L'utilisation d'un tel support d'élévation est connue sur des serres de rapport dimensionnel caractéristique plus élevé. Il sert alors pour améliorer la ventilation et l'évacuation des eaux de pluie. Son utilisation pour réaliser une rupture de pente sur une serre aplatie permet de résoudre le problème de condensation dans le tiers central, problème seulement rencontré dans ce type de serres.

L'utilisation du support d'élévation évite en outre la fabrication d'arceaux formant toiture spécifiques à la rupture de pente selon l'invention. En outre, cela réduit la quantité de matériaux nécessaire pour former les arceaux formant toiture dans la mesure où la longueur d'arc nécessaire diminue d'autant avec la hauteur de faîte des arceaux.

En effet, avec cette caractéristique, le faîte des arceaux formant toiture est ramené à un rapport faîte sur largeur de nef très faible.

Selon un mode de réalisation préférentiel de l'invention, le rapport de la distance entre le point de jonction des arceaux et la droite horizontale passant par les extrémités supérieures des poteaux sur la largeur de nef est inférieur à 0,17.

Cette caractéristique selon laquelle le rapport faîte sur largeur de nef des arceaux est inférieur à 0,17 permet de placer aussi les linteaux latéraux très bas par rapport aux sommets des poteaux latéraux et d'autoriser une ventilation et un éclairage de la serre optimal.

Selon un mode de réalisation préférentiel, le rapport de la distance entre le point de jonction des arceaux et la droite horizontale passant par les extrémités supérieures des poteaux sur la largeur de nef est inférieur à 0,15.

Cette caractéristique assure une forme globale très plate de la serre, ce qui est très avantageux du point de la lumière et de la quantité de matériaux utilisée. Cela permet néanmoins d'assurer, avec un support d'élévation permettant une pente de 15° pour les ouvrants, une rupture de pente résolvant les problèmes de condensation particuliers à une serre aussi aplatie. En outre, même avec l'élévation impliquée par la présence des ouvrants, une telle serre conserve un rapport dimensionnel caractéristique très avantageux car très plat. En effet, l'élévation nécessaire pour assurer une pente de 15° des doubles ouvrants sur le tiers central de la serre aplatie autorise un rapport dimensionnel caractéristique faible inférieur à 0,20. Les ombres portées sont alors réduite.

Dans des implémentations de l'invention, les arceaux formant toiture sont des arcs en cintre, brisés ou non.

Cette caractéristique permet d'utiliser des arceaux divers et variés qui peuvent être cintrés de manière continue ou brisés en une forme ogivale. Le support d'élévation est, dans tous les cas, fixé au niveau de la jointure entre les arceaux latéraux.

Dans une réalisation particulière, le support d'élévation est réalisé à partir d'une tôle pliée selon une forme trapézoïdale.

Cette caractéristique est une façon économique de réaliser le support d'élévation. Il permet également d'obtenir un plateau en haut du support d'élévation et donc au sommet de la serre. Ce plateau permet de fixer des éléments de fixation spécifiques permettant d'articuler les ouvrants de chaque côté et, à la fois, de respecter les problèmes dimensionnels rencontrés dans les serres de cette dimension.

La présence de ce plateau au sommet de la serre est avantageuse également pour toute l'installation des films plastiques et des éventuelles goulottes permettant de recueillir les eaux de pluie, etc...

Cette forme assure en outre une très bonne tenue mécanique pour résister aux contraintes particulières exercées sur ce support par les ouvrants, surtout lorsque ceux-ci reçoivent du vent.

D'autres réalisations d'un support d'élévation sont connues de l'art antérieur mais cette forme particulière apporte un plus haut niveau de la résistance à l'arrachement. Il bénéficie d'une grande facilité de montage sur les arceaux formant toiture et d'une grande facilité d'installation des ouvrants sur le sommet de la serre.

Avantageusement, la serre comprend un module de gestion automatique des ouvrants apte à commander le fonctionnement de moyens d'ouverture des ouvrants et programmé pour commander l'ouverture des ouvrants en fonction de l'angle d'incidence solaire.

Cette caractéristique permet de gagner encore en temps d'ensoleillement en assurant notamment une diminution des ombres portées puisque les rayons du soleil peuvent passer entre les ouvrants et les linteaux latéraux de la serre lorsque les ouvrants sont mis à plat et suivent, ensemble, l'incidence solaire.

L'angle d'incidence solaire peut être préprogrammé au sein du module, typiquement stocké dans une mémoire, en fonction du jour calendaire et de l'heure sur le lieu d'installation de la serre.

Le module de gestion peut aussi être relié à un capteur de l'angle d'incidence solaire, le module de gestion des ouvrants recevant alors des données d'angle d'incidence solaire mesuré et étant programmé pour commander l'ouverture des ouvrants en fonction de cet angle mesuré.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B illustrent le problème des zones d'ombre portées dans les installations de serres multi-chapelles ;
- la figure 2 montre le profil d'une serre présentant le rapport dimensionnel maximal selon l'invention avec un double ouvrant central et, superposé, le profil d'une serre selon l'invention ;
- la figure 3 illustre l'avantage de l'invention d'un point de vue de la ventilation ;
- la figure 4 montre une position des ouvrants particulièrement avantageuse en début de journée et rendue possible par l'invention ;
- la figure 5 illustre l'avantage de l'invention d'un point de vue de l'incidence solaire en début de journée et de l'ombre générée par la présence des doubles ouvrants pour une incidence solaire de 15° ;
- les figures 6A et 6B montrent une réalisation préférentielle de l'invention utilisant un support d'élévation ; et
- la figure 7 montre le support d'élévation en détail.

### Description détaillée de l'invention

Il est actuellement reconnu, dans le domaine des serres horticoles et agricoles, que le moindre pourcentage de lumière supplémentaire apporte un avantage considérable pour la production.

En effet, le moteur du système serre est la photosynthèse qui est directement liée à la quantité de lumière reçue par les plantes.

Jusqu'à présent, l'optimisation de la lumière est déterminée principalement par un ajustement de l'incidence du soleil par rapport aux parois de la serre.

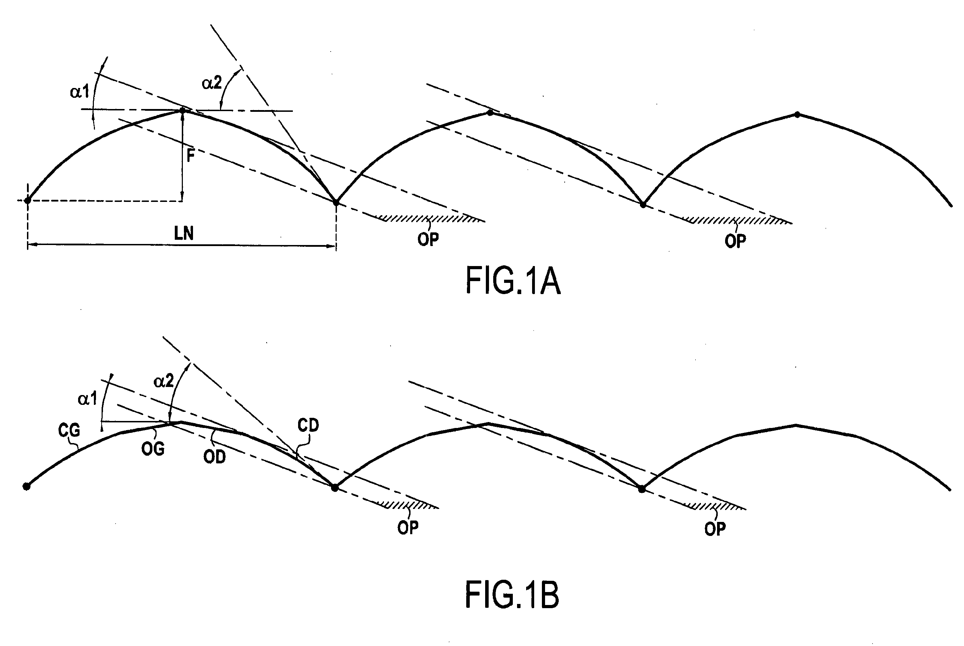

Cet ajustement a conduit à des serres du type ogival, tel que représenté sur la figure 1A.

Sur cette figure, le rapport faîte F sur largeur de nef LN est égal à 0,286 et l'angle sous lequel est vue la hauteur de faîte à partir du point de chéneau, noté C, est de 29,7°.

Sur la figure 1A est représentée une pluralité de rayons d'incidences α1 = 20°. On voit qu'il existe des ombres portées OP sur les voutes successives et à l'intérieur des serres pour tout angle d'incidence solaire inférieur à α2=54°. Ces ombres portées engendrent une inhomogénéité de la température au sein de la serre en début de matinée.

Ces inhomogénéités de température engendrent des stress différents sur les cultures et des différentiels de croissance au sein des cultures pratiquées dans la serre. Cela est d'autant plus vrai que les ombres portées privent complètement de lumière certaines zones de la serre en début de journée. Ces zones perdant des heures d'ensoleillement, il en résulte des disparités de croissance. On note donc ici que le problème des ombres portées est particulièrement préjudiciable dans le cas où les serres présentent une largeur de nef importante, typiquement des largeurs de nef supérieures à 9 mètres, car les dimensions des ombres portées sont considérables. On voit ainsi, sur la figure 1A, qu'avec un rapport dimensionnel caractéristique, ici égal au rapport faîte sur largeur de nef des arceaux en ogive, de l'ordre de 0,286, avec une incidence du soleil de 20°, environ un tiers de la serre est soumise à des ombres portées OP.

Globalement, avec la serre de la figure 1A, les ombres portées OP ne disparaissent que pour des angles d'incidence du soleil supérieurs à 50°, ce qui est un angle d'incidence important. Cela fait perdre une importante quantité d'heures d'ensoleillement matinales.

Afin de diminuer l'effet des ombres portées, il est connu d'utiliser des films réalisant une diffusion de la lumière, l'usage de ces films permet d'améliorer légèrement la répartition de la lumière au sein de la serre mais cela ne résout pas le problème de l'inhomogénéité de la température et des stress auxquels sont soumises localement les cultures.

La figure 1B montre une serre présentant un rapport dimensionnel caractéristique maximal selon l'invention, c'est-à-dire faîte sur largeur de nef F/LN = 0,20. Cette serre est représentée avec des cintres CG et CD en ogive de profil classique dans ce domaine.

On note ici qu'il est nécessaire que les cintres CD et CG formant toiture soient courbés pour obtenir des tensions correctes des films plastiques constituant les parois et la limitation des phénomènes de condensation sur les parties non ouvrantes de la serre. La serre de la figure 1B est munie d'ouvrants sur faîtage OG et OD. Chaque ouvrant présente classiquement une largeur de l'ordre d'un tiers de la demi-largeur de nef. Cela entraîne que la pente des ouvrants est de l'ordre de 10°.

Une telle pente ne convient pas à un écoulement correct des gouttelettes de condensation qui se seraient accumulées sur la paroi intérieure du tiers central pendant la nuit. Le problème de condensation est rencontré avec une pente de 10° que l'on travaille en simple paroi ou en paroi double gonflable.

En effet, même en simple paroi, la flèche des films de plastique utilisés à ce jour ne permet pas l'élimination avec un angle de 10° de l'ouvrant d'un point bas. Cela est bien sûr aussi le cas avec une double paroi gonflable, même en présence d'une tension différentielle du film.

Cela est d'autant plus critique dans les serres plates de grandes largeurs, puisque, comme vu précédemment, on sait que le tiers central de la serre rassemble la majorité de l'eau condensée.

En outre, dans la mesure où, en l'absence d'ouvrants sur chéneaux, la seule possibilité pour aérer la serre est d'ouvrir le double ouvrant central, il n'existe pas de solution pour évacuer la condensation de manière correcte grâce à la ventilation puisque l'ouverture du double ouvrant entrainerait un gouttage au sein de la serre.

Par ailleurs, on remarque que, dans le cas d'une pluie, 10° d'angle d'ouverture est insuffisant pour prétendre à une ventilation suffisante et à un écoulement correct de la pluie. En effet, pour permettre un écoulement correct, il est nécessaire de conserver une pente de l'ordre de 2° pour les ouvrants, ce qui entraîne une ouverture de 8° seulement de l'ouvrant, ce qui est trop peu pour permettre une ventilation correcte.

On note donc ici que, pour toutes serres plates dont le rapport dimensionnel caractéristique est inférieur à 0,20, il est proscrit ou du moins préjudiciable, de placer un ouvrant double sur faîtage jusqu'à l'invention.

On remarque cependant que, sur la figure 1B, une incidence solaire de α1=20°, engendre la présence d'une ombre portée OP minime et négligeable. En outre les ombres portées disparaissant pour un angle α2=40°, ce qui élargit considérablement la plage d'ensoleillement de la serre. On comprend ici tout l'avantage des serres à profil aplati même si l'incidence solaire est moins favorable du point de vue de la réfraction.

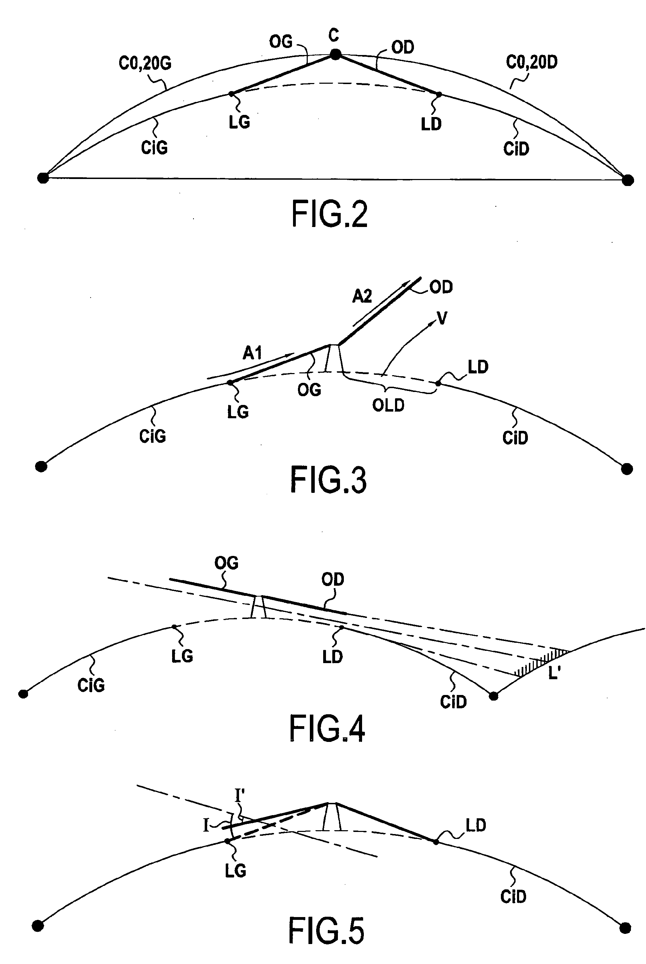

La solution selon l'invention est représentée sur la figure 2. Il s'agit de profiler la serre de manière à ce qu'elle présente une rupture de pente dans le sens de la concavité du profil aplati de la serre.

Sur la figure 2, sont représentés deux profils. Le premier profil est basé sur l'utilisation d'un cintre C0.20 présentant un rapport faîte sur largeur de nef égal à 0,20, sur lequel il n'est pas possible de placer un ouvrant double sur faîtage fonctionnel tout en conservant une courbure suffisante des arceaux latéraux C0,20D et C0,20G pour placer un film plastique sur la voute.

Le second profil, profil selon l'invention, est tel qu'un ouvrant double central, constitué de deux ouvrants latéraux OG et OD, culmine au même point C que les cintres C0.20G et C0,20D, assurant un rapport dimensionnel caractéristique de la serre égal à 0,20 mais descend de part et d'autre de ce point central C, sommet de la serre, en faisant un angle supérieur à 15° avec l'horizontale, ici 21°.

Les bouts des ouvrants viennent se poser sur des linteaux latéraux LG et LD, placés sur des cintres CiG et CiD qui rejoignent les chéneaux de part et d'autre de la serre. On observe que la tangente des cintres CiG et CiD à l'endroit des linteaux LD et LG fait un angle non nul avec la pente de l'ouvrant placé à un angle de 21°, supérieur à 15°, de l'horizontale. Un tel profil, brisé de part et d'autre du centre de la serre, permet de résoudre le problème de condensation sur le tiers central de la serre.

On remarque qu'avec l'invention, le positionnement de l'ouvrant en casquette lorsqu'il pleut est parfaitement fonctionnel puisqu'il est possible d'ouvrir l'ouvrant à un angle supérieur à 10° tout en assurant un écoulement parfait de l'eau sur l'ouvrant.

Les ouvrants sont avantageusement d'une largeur entre leur articulation et leur bout d'ouvrant de l'ordre du tiers de la demi-largeur de nef. Les ouvrants recouvrent donc toute la partie qui pose problème actuellement d'un point de vue de la condensation dans les serres plates à ouvrant sur chéneaux en l'absence de vent suffisant. Dans des serres de très grandes largeurs, par exemple au-dessus de 12 mètres, la portion représentée par les ouvrants pourra, bien sûr, être moins importante qu'un tiers de la largeur. On comprend bien cependant que, le problème de condensation étant de plus en plus critique que l'on se rapproche du centre de la serre, la présence d'ouvrant double avec rupture de pente sera toujours intéressante même si l'ouvrant double ne couvre qu'une portion inférieure à un tiers de la largeur de la serre. Ainsi, même si une portion de l'ordre d'un tiers de la largeur de nef est préférentielle, des ouvrants doubles représentant un sixième de la largeur de nef pourront être envisagés dans les serres les plus larges.

Le rôle de l'ouvrant est d'accentuer la pente de chaque côté du sommet de la serre au niveau de l'endroit posant justement problème du point de vue de la condensation. Cela résout en outre le problème de la ventilation des serres plates en zone peu ventée. En effet, l'invention rend possible l'installation d'un ouvrant double sur faîtage dans le cas très particulier des serres plates.

Un des avantages des serres plates connues est que leur voute engendre peu de turbulence dans la circulation du vent au-dessus de la serre multi-chapelles. L'invention concerne aussi le maintien d'un flux le plus laminaire possible au-dessus de la serre multi-chapelles.

Ainsi que représenté sur la figure 3, l'objet de l'invention permet des ruptures de pente en deux temps. Le vent subit tout d'abord une première accélération A1 sur la pente de l'ouvrant de gauche noté OG puis une accélération A2 plus importante sur la paroi extérieure de l'ouvrant de droite OD ouvert. Cela est du à l'angle croissant par rapport à l'horizontale. Une telle accélération progressive des flux d'air engendre un effet venturi V maximal en bout d'ouvrant car les flux d'air restent les plus laminaires possibles, dans la mesure où la géométrie des ouvrants minimise la création de turbulences contreproductives. L'invention permet ainsi d'optimiser l'effet venturi V d'aspiration en maintenant le flux de vent le plus laminaire possible. La combinaison de la rupture de pente avec la platitude de la serre permet donc une augmentation de la ventilation par effet venturi en présence de vent.

La figure 4 montre un avantage complémentaire de l'invention relativement subtil mais qui peut s'avérer important pour gagner quelques pourcents de lumière ou des minutes d'ensoleillement.

En effet, on note que, en réglant la position des ouvrants OG et OD de manière adaptée à l'évolution du déplacement du soleil en matinée, il est possible de récupérer des rayons sur une surface L' de la voute successive dans le trajet du rayon en laissant passer ces rayons sous les ouvrants entre les ouvrants OG et OD et les linteaux LD et LG sur lesquels les bouts d'ouvrants viennent se poser lors de la fermeture de ceux-ci. Il est ainsi possible de récupérer les rayons du soleil d'incidence inférieure à 30° pendant une courte période, en début de journée, qui est un moment critique notamment du point de vue de la condensation, et, au besoin, en fin de journée.

En général, les ouvrants sont motorisés pour permettre l'ouverture et la fermeture de ceux-ci. Cette motorisation est traditionnellement gérée par un module de gestion, typiquement un ordinateur, relié à une station météo. Cette station météo comprend typiquement une sonde hygrométrique, une sonde de température à l'intérieur de la serre, une sonde pluie, des sondes vélocité et direction du vent a l'extérieur. Ainsi, l'ouverture et la fermeture des ouvrants obéissent aux contraintes intérieures et extérieures.

Selon l'invention, un tel module de gestion est avantageusement connecté soit à un calendrier, date et heure, incluant les incidences solaires au moins pour les incidences basses en dessous de 30°. Un tel module de gestion peut aussi être relié à un capteur d'incidence solaire. Il est alors en mesure de décider de « mettre à plat » les deux ouvrants et de modifier l'angle d'ouverture des ouvrants « mis à plat » pour former un plan qui s'incline au fur et à mesure de l'avancement de l'incidence solaire. Il est ainsi possible de gagner encore de la quantité de lumière dans la serre.

On note que cette caractéristique de suivi de l'incidence solaire par le double ouvrant mis à plat pour former un plan suivant l'incidence solaire peut être mise en oeuvre indépendamment de la configuration de serre particulièrement revendiquée pour en optimiser l'entrée de lumière. Cependant, avec l'invention qui permet un profil aplati permettant déjà de diminuer les ombres portées tout en évitant les problèmes de condensation, cette caractéristique est encore plus intéressante car elle permet de gagner encore davantage de la lumière.

La figure 5 montre la différence d'incidence du soleil sur un ouvrant faisant un angle de 10° avec l'horizontale et sur un ouvrant faisant un angle de 15° avec l'horizontale.

On remarque que les rayons de soleil en début de journée, par exemple ici pour un angle d'incidence égal à 15°, l'incidence I des rayons sur le tiers central de la serre est plus favorable à la pénétration de rayons dans la serre lorsque l'ouvrant présente une pente de 15°. Cela permet de limiter les phénomènes de réfraction qui sont davantage observés dès lors que l'ouvrant présente une pente moins forte. En effet, l'incidence I' pour un ouvrant placé à 10° comme c'est le cas sur une serre de rapport dimensionnel caractéristique égal à 0,20, est moins importante.

Ainsi, en début de journée, l'invention permet de gagner de la lumière par rapport une simple serre aplatie où un ouvrant central aurait une pente de l'ordre de 10°. Cette incidence améliorée des rayons du soleil permet aussi un échauffement plus rapide des ouvrants et cela participe à l'élimination de la condensation qui a pu avoir lieu sur le tiers central de la serre.

Au contraire, en milieu de journée, l'angle de 15° que font les ouvrants avec l'horizontale permet de diminuer l'incidence des rayons du soleil au zénith par rapport à un ouvrant placé à 10° offrant une incidence avec le soleil plus favorable à la pénétration des rayons dans la serre. L'angle de 15° des ouvrants selon l'invention permet de réduire l'échauffement de la serre en milieu de journée et le rayonnement direct du soleil au zénith sur les cultures.

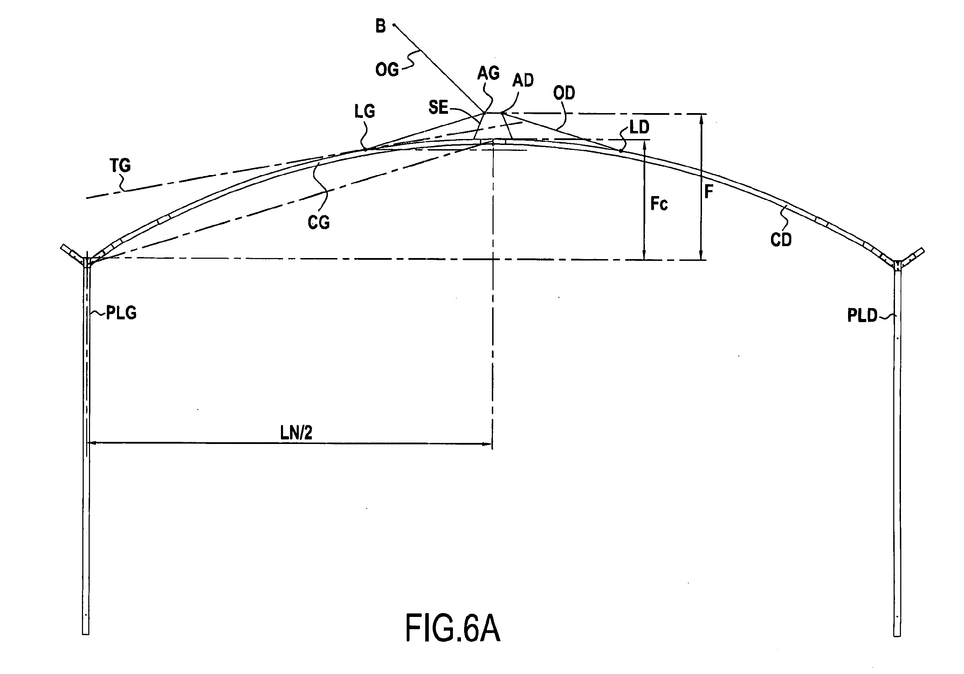

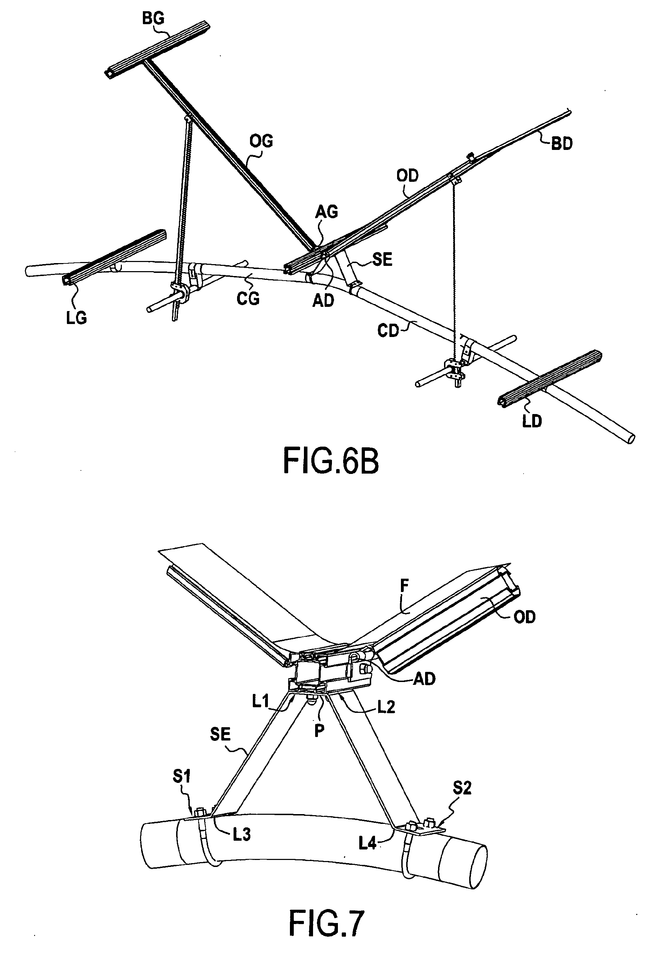

Les figures 6A et 6B montrent une réalisation préférentielle de l'invention. Sur ces figures qui sont respectivement une vue du profil de la serre et une perspective partielle des structures dans lesquelles se retrouve l'invention, sont représentés deux arcs en cintre CG et CD, montés chacun sur un poteau latéral PLG et PLD. Ici, la hauteur sous voute F est égale à 1,68 mètres et la largeur de nef LN est égale à 9,60 mètres. Ainsi le rapport dimensionnel caractéristique est égal à 0,175.

Cette valeur assure un important aplatissement de la serre, ce qui permet de diminuer les ombres portées sur les serres successives de manière très satisfaisante.

Des ouvrants latéraux gauche et droite OG et OD montés au sommet de la serre présentent une largeur de 1,50 m. La pente que chaque ouvrant fermé fait avec l'horizontale est de 17°. Le bout B de chaque ouvrant OG et OD vient reposer sur un linteau latéral, respectivement gauche et droite LG et LD, quand l'ouvrant OG, respectivement OD, est fermé.

Les pentes de chaque ouvrant OG et OD viennent en rupture de pente avec les tangentes TG et TD prises au niveau des linteaux LG et LD. On note par exemple que la tangente TG au point LG fait en effet un angle de 10° avec l'horizontale, l'ouvrant OG venant faire un angle de 7° avec cette tangente TG.

La rupture de pente est ici assurée par la présence d'un support d'élévation SE d'une hauteur de 30 cm, placé au faîte des cintres CG et CD. Ce support porte les axes d'articulation AG et AD des ouvrants OG et OD.

Les cintres CG et CD sont ici tels que le rapport faîte du cintre Fc sur largeur de nef LN est égal à 0,144.

Une telle valeur de ce rapport assure un très grand aplatissement de la voute globale et permet une diminution drastique des ombres portées. Cet avantage est encore renforcé dès lors que l'on réalise un suivi des rayons du soleil par une ouverture progressive des deux ouvrants mis à plat angulée par rapport au soleil ainsi que représenté schématiquement sur la figure 5.

En effet, l'aplatissement très prononcé de la voute formée par les cintres autorise de faire passer les rayons du soleil sous les ouvrants mis à plat. On obtient alors un ensoleillement comparable à celui obtenu avec une serre présentant un rapport dimensionnel caractéristique égale au rapport faîte des cintres Fc sur largeur de nef LN alors même que la serre culmine, en réalité, plus haut grâce à la rupture de pente.

En outre on note que la pente maximale « à plat » des ouvrants est égale à l'angle de fermeture des ouvrants qui est au minimum de 15° et, dans le cas de la serre de la figure 6, de 17°. Il se trouve qu'avec l'invention, comme la serre est très aplatie, cet angle d'incidence solaire de 17° correspond à des ombres portées de très faibles étendues. Avec l'invention, on assure donc une durée d'occurrence d'ombres portées minimale.

Lors du lever du soleil, les ouvrants sont avantageusement mis à plat horizontalement. Ensuite, ils sont inclinés au fur et à mesure de la montée du soleil et en suivant incidence solaire. Une fois l'angle de fermeture d'un des ouvrants atteinte, l'angle d'incidence solaire est alors proche de celui pour lequel les ombres portées disparaissent. On peut donc assurer que, une fois la pente maximale du plan des ouvrants atteinte par suivi de l'incidence solaire, le profil aplati de la serre prenne le relai pour assurer un ensoleillement amélioré par rapport à une serre gothique classique.

On remarque ainsi qu'avec la serre de la figure 6, lorsque l'ouvrant est fermé, les ombres portées sont faibles pour des angles supérieurs à 20° et, avec un procédé de suivi de l'incidence solaire sur la serre, telle que représentée sur la figure 5, il est possible de suivre l'incidence solaire basse entre 0 et 17°, angle maximal d'inclinaison du plan formé par les deux ouvrants mis à plat. On voit ici que l'ensoleillement est ainsi optimisé.

Cela est tout à fait avantageux par rapport à ce qui connu aujourd'hui. L'invention permet ainsi de gagner en durée d'ensoleillement et ainsi d'améliorer la productivité au sein des serres réalisées selon l'invention.

La serre représentée sur la figure 6A présente en outre une hauteur de poteaux latéraux supérieure à 3,5 mètres. Une telle hauteur assure un effet cheminée efficace en combinaison avec la présence du double ouvrant central malgré l'aplatissement du profil de la serre.

On note ici que d'autres moyens de surélévation de l'axe d'articulation A des ouvrants peuvent être utilisés. En particulier, il est possible d'utiliser un cintre présentant lui-même une rupture de pente, pour installer le double ouvrant selon l'invention et, ainsi, résoudre le problème de condensation.

La figure 7 représente un exemple de support d'élévation SE avantageux selon l'invention. Ce support d'élévation SE est réalisé à partir d'une plaque de tôle longitudinale, pliée sur au moins deux lignes L1 et L2 pour obtenir un plateau supérieur, noté P, sur lequel il sera possible d'installer tout élément permettant de monter le ou les axes d'articulation des ouvrants latéraux.

Les propriétés mécaniques de la tôle ainsi pliée assurent une rigidité parfaite convenant aux contraintes que peut subir la serre au niveau des ouvrants.

Avantageusement, la tôle est pliée le long de deux arêtes complémentaires L3 et L4, de manière à obtenir deux plateaux socles S1 et S2 qui permettront la fixation sur les arceaux formant toiture CG et CD. Ici la fixation est réalisée au niveau d'un manchon central reliant les arceaux CG et CD.

Le montage du support d'élévation SE est particulièrement facile. En outre, le plateau P du support d'élévation SE pourra être utilisé pour placer une panne du type clip alu telle que déjà protégée par la société FILCLAIR. Le profilé constituant cette panne, présentant quatre rails identiques, offre en effet une grande diversité de fonctions de fixation qui s'adaptent parfaitement pour fixer des axes d'articulation des ouvrants ou encore le film F recouvrant les ouvrants etc...

Dans la mesure où un seul film est tendu entre les deux bras d'ouvrants par un seul clip sur la panne extrudée, le clip central supérieur fait complètement étanchéité au niveau de la charnière. La présence du rail supérieur assure ainsi une très bonne étanchéité à la pluie.

Avantageusement, entre chaque charnière constituant l'axe d'articulation des ouvrants, la panne clip alu sera avantageusement munie d'un profil PVC de récupération du gouttage de la condensation pendant l'opération d'ouverture.

On note ici que la distance entre les charnières constituant l'axe d'articulation des ouvrants peut être variable et ajustable, tout comme l'est la fixation sur le support d'élévation.

On remarque enfin que diverses mises en oeuvre peuvent être réalisées selon les principes de l'invention.

## Revendications

1. Serre de type « chapelle » destinée à être installée en blocs « multi-chapelle » de plusieurs milliers de mètres carrés d'un seul tenant, cette serre de type « chapelle » étant constituée d'une pluralité d'unités structurelles implantées parallèlement les unes aux autres sur toute la longueur de la nef,
chaque unité structurelle comprenant au moins deux poteaux verticaux latéraux (PLG, PLD) d'une hauteur supérieure ou égale à 3,5 mètres, séparés d'une largeur de nef (LN) strictement supérieure à 9 mètres et supportant des arceaux formant toiture au niveau de leurs extrémités supérieures, ces arceaux se rejoignant au centre de la serre, les unités structurelles étant reliées les unes aux autres au niveau des extrémités supérieures des poteaux par des chéneaux longitudinaux,
les surfaces de la serre étant conçues pour recevoir une couverture transparente formé d'un ou plusieurs films plastiques,
**caractérisé en ce que**, cette serre étant telle que le rapport de la distance (F) entre le sommet (C) de la serre et la droite horizontale passant par les extrémités supérieures des poteaux latéraux (PLG, PLC) sur la largeur de nef (LN) est inférieur à 1/5,
cette serre présente un ouvrant double central articulé sur au moins un axe d'articulation au sommet (C) de la serre, cet ouvrant double étant tel que les ouvrants latéraux (OG, OD) présentent une largeur entre l'axe d'articulation (AG, AD) et le bout de l'ouvrant (BG, BD) supérieure ou égale à 1,4 mètre, le bout de l'ouvrant (BG, BD) venant reposer sur des linteaux latéraux (LG, LD) lors de la fermeture,
le profil transversal de la serre à ouvrants fermés étant tel que, de chaque côté de la serre, l'angle formé entre la droite tangente (TG) à l'arceau (CiG, CiD) dans le plan transversal de la serre au niveau du linteau latéral (LG, LD) et la droite passant par l'axe d'articulation (AG, AD) et le bout de l'ouvrant (BG, BD) latéral fermé dans le plan transversal de la serre est non nul et crée une rupture de pente accentuant la pente de chaque côté du sommet, cette rupture de pente assurant une pente de l'ouvrant fermé supérieure ou égale à 15° par rapport à l'horizontal.

2. Serre selon la revendication 1, **caractérisé en ce que** le rapport de la distance entre le sommet de la serre et la droite horizontale passant par les extrémités supérieures des poteaux latéraux sur la largeur de nef est inférieur à 0,182.

3. Serre selon la revendication 1, **caractérisé en ce que** la rupture de pente est réalisée par l'intermédiaire d'un support d'élévation fixé sur le haut des arceaux formant toiture et au sommet duquel est placé le ou les axe(s) d'articulation des ouvrants latéraux.

4. Serre selon la revendication 3, **caractérisé en ce que** le rapport de la distance entre le point de jonction des arceaux et la droite horizontale passant par les extrémités supérieures des poteaux sur la largeur de nef est inférieur à 0,17.

5. Serre selon la revendication 4, **caractérisé en ce que** le rapport de la distance entre le point de jonction des arceaux et la droite horizontale passant par les extrémités supérieures des poteaux sur la largeur de nef est inférieur à 0,15.

6. Serre selon l'une des revendications 3 à 5, **caractérisé en ce que** les arceaux formant toiture sont des arcs en cintre brisé ou non.

7. Serre selon l'une des revendications 3 à 6, **caractérisé en ce que** le support d'élévation est réalisé à partir d'une tôle pliée selon une forme trapézoïdale.

8. Serre selon l'une des revendications précédentes, **caractérisé en ce que** la serre comprend un module de gestion automatique des ouvrants apte à commander le fonctionnement de moyens d'ouverture des ouvrants et programmé pour commander l'ouverture des ouvrants en fonction de l'angle d'incidence solaire.

9. Serre selon la revendication 8, **caractérisé en ce que** l'angle d'incidence solaire est préprogrammé au sein du module, en fonction du jour calendaire et de l'heure à l'endroit d'installation de la serre.

10. Serre selon la revendication 8, **caractérisé en ce que** le module de gestion est relié à un capteur de l'angle d'incidence solaire, le module de gestion des ouvrants recevant alors des données d'angle d'incidence solaire mesuré et étant programmé pour commander l'ouverture des ouvrants en fonction de cet angle mesuré.

## Patentansprüche

1. "Schiff"-artiges Treibhaus, das dazu bestimmt ist, in "mehrschiffigen" Blöcken von mehreren Tausend Quadratmetern in einem Stück aufgestellt zu werden, wobei dieses "Schiff"-artige Treibhaus aus einer Vielzahl von Struktureinheiten besteht, die parallel zueinander über die gesamte Länge des Schiffes angeordnet sind,
wobei jede Struktureinheit wenigstens zwei vertikale Seitenpfosten (PLG, PLD) mit einer Höhe größer als oder gleich 3,5 Metern umfasst, die um eine Schiffbreite (LN) streng größer als 9 Meter getrennt sind und die im Bereich ihrer oberen Enden eine Bedachung bildende Bögen tragen, wobei diese Bögen in der Mitte des Treibhauses zusammentreffen, wobei die Struktureinheiten im Bereich der oberen Enden der Pfosten durch Längsdachrinnen miteinander verbunden sind,
wobei die Oberflächen des Treibhauses dazu ausgelegt sind, eine von einer oder mehreren Kunststofffolien gebildete transparente Abdeckung aufzunehmen,
**dadurch gekennzeichnet, dass**, da dieses Treibhaus derart ist, dass das Verhältnis des Abstandes (F) zwischen dem Scheitel (C) des Treibhauses und der durch die oberen Enden der Seitenpfosten (PLG, PLC) verlaufenden horizontalen Geraden zu der Schiffbreite (LN) kleiner als 1/5 ist,
dieses Treibhaus einen mittleren Doppelflügel aufweist, der um wenigstens eine Gelenkachse am Scheitel (C) des Treibhauses angelenkt ist, wobei dieser Doppelflügel derart ist, dass die Seitenflügel (OG, OD) eine Breite zwischen der Gelenkachse (AG, AD) und dem Ende des Flügels (BG, BD) größer als oder gleich 1,4 Meter aufweisen, wobei das Ende des Flügels (BG, BD) beim Schließen auf Seitenstürzen (LG, LD) zu liegen kommt,
wobei das Querprofil des Treibhauses mit geschlossenen Flügeln derart ist, dass auf jeder Seite des Treibhauses der Winkel, der zwischen der Geraden (TG) tangential zu dem Bogen (CiG, CiD) in der Querebene des Treibhauses im Bereich des Seitensturzes (LG, LD) und der durch die Gelenkachse (AG, AD) und das Ende des geschlossenen Seitenflügels (BG, BD) verlaufenden Geraden in der Querebene des Treibhauses gebildet ist, ungleich null ist und eine Neigungsunterbrechung erzeugt, die die Neigung auf jeder Seite des Scheitels betont, wobei diese Neigungsunterbrechung eine Neigung des geschlossenen Flügels von mehr als oder gleich 15° gegenüber der Horizontalen sicherstellt.

2. Treibhaus nach Anspruch 1, **dadurch gekennzeichnet, dass** das Verhältnis des Abstandes zwischen dem Scheitel des Treibhauses und der durch die oberen Enden der Seitenpfosten verlaufenden horizontalen Geraden zu der Schiffbreite kleiner als 0,182 ist.

3. Treibhaus nach Anspruch 1, **dadurch gekennzeichnet, dass** die Neigungsunterbrechung mittels eines Erhöhungsträgers, der an der Oberseite der die Bedachung bildenden Bögen befestigt ist und an dessen Scheitel die Gelenkachse(n) der Seitenflügel angeordnet ist, realisiert ist.

4. Treibhaus nach Anspruch 3, **dadurch gekennzeichnet, dass** das Verhältnis des Abstandes zwischen der Verbindungsstelle der Bögen und der durch die oberen Enden der Pfosten verlaufenden horizontalen Geraden zu der Schiffbreite kleiner als 0,17 ist.

5. Treibhaus nach Anspruch 4, **dadurch gekennzeichnet, dass** das Verhältnis des Abstandes zwischen der Verbindungsstelle der Bögen und der durch die oberen Enden der Pfosten verlaufenden horizontalen Geraden zu der Schiffbreite kleiner als 0,15 ist.

6. Treibhaus nach einem der Ansprüche 3 bis 5, **dadurch gekennzeichnet, dass** die die Bedachung bildenden Bögen Rundbögen sind, abgeknickt oder nicht.

7. Treibhaus nach einem der Ansprüche 3 bis 6, **dadurch gekennzeichnet, dass** der Erhöhungsträger aus einem entsprechend einer Trapezform gebogenen Blech hergestellt ist.

8. Treibhaus nach einem der vorhergehenden Ansprüche, **dadurch gekennzeichnet, dass** das Treibhaus ein Modul zur automatischen Steuerung der Flügel umfasst, das geeignet ist, den Betrieb von Mitteln zum Öffnen der Flügel zu steuern, und das programmiert ist, um das Öffnen der Flügel in Abhängigkeit von dem Sonneneinfallwinkel zu steuern.

9. Treibhaus nach Anspruch 8, **dadurch gekennzeichnet, dass** der Sonneneinfallwinkel innerhalb des Moduls in Abhängigkeit von dem Kalendertag und der Stunde am Aufstellungsort des Treibhauses vorprogrammiert ist.

10. Treibhaus nach Anspruch 8, **dadurch gekennzeichnet, dass** das Steuerungsmodul mit einem Sensor für den Sonneneinfallwinkel verbunden ist, wobei das Steuerungsmodul der Flügel nun Daten des gemessenen Sonneneinfallwinkels empfängt und programmiert ist, um das Öffnen der Flügel in Abhängigkeit von diesem gemessenen Winkel zu steuern.

## Claims

1. A "span" type greenhouse designed to be installed in "multi-span" runs each covering several thousand square meters uninterrupted, this "span" type greenhouse being constituted by a plurality of structural units installed parallel to one another over the entire length of the bay defined under the span;
each structural unit being made up of at least two side vertical posts (PLG, PLD) having a height greater than or equal to 3.5 m, separated by a bay width (LN) strictly greater than 9 m and supporting roof-forming arch segments at their top ends, which arch segments meet at the center of the greenhouse, the structural units being connected together at the top ends of the posts via longitudinal gutters;
the surfaces of the greenhouse being designed to receive a transparent roof covering made up of one or more plastic films;
said greenhouse being **characterized in that**, with said greenhouse being such that the ratio of the distance (F) between the top (C) of the greenhouse and the horizontal straight line passing through the top ends of the side posts (PLG, PLD) over the bay width (LN) is less than 1/5;
said greenhouse has central double opening windows hinged along at least one hinge axis at the top (C) of the of greenhouse, these double opening windows being such that each of the side opening windows (OG, OD) has a width between the hinge axis (AG, AD) and the end of the opening window (BG, BD) higher or equal to 1.4 m, the end of the opening window (BG, BD) coming to rest on side lintels (LG, LD) on closure;
the transverse profile of the greenhouse with its opening windows closed being such that, on either side of the greenhouse, the angle formed between the straight line (TG) that is tangential to the arch segment (CIG, CID) in the transverse plane of the greenhouse at the side lintel (LG, LD) and the straight line intersecting the hinge axis and the end of the closed side opening window in the transverse plane of the greenhouse is non-zero and creates a break accentuating the slope on either sides of the top, this break in slope procuring a slope for the closed opening window that is greater than or equal to 15° in respect to horizontal.

2. A greenhouse according to claim 1, **characterized in that** the ratio of the distance between the top of the greenhouse and the horizontal straight line passing through the top ends of the side posts over the bay width is less than 0.182.

3. A greenhouse according to claim 1, **characterized in that** the break in slope is provided via an elevation support fastened to the top of the roof-forming arch segments and at the top of which the hinge axis or hinge axes of the side opening windows is/are placed.

4. A greenhouse according to claim 3, **characterized in that** the ratio of the distance between the point of junction at which the arch segments meet and the horizontal straight line passing through the top ends of the posts over the bay width is less than 0.17.

5. A greenhouse according to claim 4, **characterized in that** the ratio of the distance between the point of junction at which the arch segments meet and the horizontal straight line passing through the top ends of the posts over the bay width is less than 0.15.

6. A greenhouse according to any one of claims 3 to 5, **characterized in that** the roof-forming arch segments are arcuate segments or "arcs", the curvature of which may be broken or unbroken.

7. A greenhouse according to any one of claims 3 to 6, **characterized in that** the elevation support is made of a metal sheet folded into a trapezoid shape.

8. A greenhouse according to any preceding claim, **characterized in that** the greenhouse includes an automatic management module for automatically managing the opening windows, which module is suitable for controlling operation of the opening windows and is programmed to control opening of the opening windows as a function of the angle of solar incidence.

9. A greenhouse according to claim 8, **characterized in that** the angle of solar incidence is preprogrammed in the module, as a function of the calendar day and of the time at the place where the greenhouse is installed.

10. A greenhouse according to claim 8, **characterized in that** the management module is connected to a sensor for sensing the angle of solar incidence, the management module for managing the opening windows then receiving data giving measured angle of solar incidence and being programmed to control the opening of the opening windows as a function of said measured angle.
